Europäisches Patentamt

European Patent Office

Office européen des brevets

(19)

(11) Veröffentlichungsnummer: **0 272 673 B1**

## (12) EUROPÄISCHE PATENTSCHRIFT

(45) Veröffentlichungstag der Patentschrift: **29.07.92**

(51) Int. Cl.5: **C02F 1/52**, G05D 21/00, G01N 21/00

(21) Anmeldenummer: **87118953.6**

(22) Anmeldetag: **21.12.87**

(54) Verfahren zum Konditionieren und Entwässern von Schlämmen.

(30) Priorität: **22.12.86 DE 3644070**

(43) Veröffentlichungstag der Anmeldung:
**29.06.88 Patentblatt 88/26**

(45) Bekanntmachung des Hinweises auf die
Patenterteilung:
**29.07.92 Patentblatt 92/31**

(84) Benannte Vertragsstaaten:
**AT CH DE ES FR GB IT LI NL**

(56) Entgegenhaltungen:
EP-A- 0 146 015          EP-A- 0 151 747
EP-A- 0 157 310          EP-A- 0 240 974
DE-A- 2 022 752          DE-A- 3 143 825
DE-A- 3 344 275          US-A- 4 497 576

GWF DAS GAS-UND WASSERFACH. vol. 121,
no. 6, Juni 1980, MUNCHEN DE Seiten 277 -
282; H. OVERATH ET AL.: "Ein neues Verfahren zur Steuerung der Flockungsmittel bei
der Oberflächenwasser-Aufbereitung"

GWF DAS GAS-UND WASSERFACH. vol. 123,
no. 3, März 1982, MUNCHEN DE Seiten 131 -
138; K. AHRENS ET AL.: "Überwachung der

Flockung bei der Wassseraufbereitung mit
Hilfe eines rechner gesteuerten physikalischen Modells"

(73) Patentinhaber: **PASSAVANT-WERKE AG**

**W-6209 Aarbergen 7(DE)**

(72) Erfinder: **Schmitt, Wälti, Dipl.-Ing.
An der Schmalmach 41
W-6208 Bad Schwalbach(DE)**

(74) Vertreter: **Glawe, Delfs, Moll & Partner Patentanwälte
Postfach 26 01 62 Liebherrstrasse 20
W-8000 München 26(DE)**

EP 0 272 673 B1

## Beschreibung

Die Erfindung betrifft ein Verfahren zum Konditionieren und Entwässern von Schlämmen von der im Oberbegriff des Anspruchs 1 angegebenen Art.

Unter Flockmittel sollen hier allgemein alle Mittel verstanden werden, welche die Flockenbildung und/oder die Größe, Belastbarkeit und Entwässerbarkeit der gebildeten Flocken günstig beeinflussen. Hierunter fallen insbesondere die eigentlichen Flockungsmittel,die die Ausflockung gelöster oder kolloidaler Inhaltstoffe bewirken und die sogenannten Flockungshilfsmittel,die die Agglomeration und Verfestigung der Flocken begünstigen. Bevorzugtes Anwendungsgebiet der Erfindung ist die Schlammkonditionierung durch Zugabe von Flockungshilfsmittel in Form organischer Polymerverbindungen, sogenannter Polyelektrolyte.

Es ist bekannt, daß je nach dem jeweiligen Anwendungsfall der verwendeten Entwässerungsvorrichtung u. dgl. ein bestimmtes Mengenverhältnis des Flockungsmittels zur Feststoffmenge des Schlammes für die Erzielung einer optimalen Entwässerbarkeit erforderlich ist und daß eine Unterschreitung der optimalen Dosiermenge zu einer ungenügenden Entwässerbarkeit, eine Überschreitung zu einem unnötig hohen Verbrauch an Flockmittel führt. Die optimale Dosiermenge kann durch Probeversuche z. B. nach dem Becher-Sedimentationstest oder auch mit einer Testapparatur mit Rohrmischstrecke und Trübungsmesser (DE-OS 31 43 825) ermittelt und dann an der Konditionieranlage fest eingestellt werden. Sowohl die Strömungsmenge als auch der Feststoffgehalt (Schlammtrockensubstanz STS) können aber in der Praxis stark schwanken. Es ist deshalb ein Verfahren der eingangs genannten Art bekannt, bei dem die Flockmittelzugabe anhand des vor der Dosierstelle gemessenen STS-Massestroms gesteuert wird (Abwassertechnik Heft 1/1965, S. 4, 5), wobei der Feststoffgehalt des Schlammes auch z. B. mittels einer optischen Trübungsmessung (DE-AS 20 22 752) erfaßt werden kann.

Nicht berücksichtigt wird bei diesem bekannten Verfahren aber, daß das Optimum der Flockmitteldosierung nicht allein von Menge und Feststoffgehalt des Schlammes abhängt, sondern auch von anderen Parametern, insbesondere der Schlammbeschaffenheit (z.B. ob Belebtschlamm, Faulschlamm, Flockungsschlamm usw.). Weiterhin geben die vorbekannten Verfahren keine Möglichkeit, neben oder statt der Dosiermenge andere Parameter der Konditionierung zu beeinflussen.

Ein Verfahren und eine Vorrichtung gemäß dem Oberbegriff der Ansprüche 1 und 5 sind aus EP-A-0 157 310 bekannt. Bei diesem bekannten Verfahren werden mittels einer laseroptischen Anordnung Streulicht, Abschattungs- oder Reflexionssignale von den Partikeln der strömenden Suspension gewonnen, und aus diesen wird rechnerisch ein Effektivwert gebildet, der im wesentlichen proportional zum Produkt aus Menge und Größe der Partikel ist. In Abhängigkeit von diesem als Dispergiergrad bezeichneten Effektivwert kann die Dosierung eines Flockungshilfsmittels gesteuert werden. Die Größe und Zahl von durch Flockung gebildeten Schlammpartikeln ermöglichen aber keine eindeutigen Rückschlüsse auf die Entwässerbarkeit des Flockungsschlamms, und deshalb ist mit diesem Verfahren eine Optimierung der Flockmitteldosierung im Hinblick auf möglichst gute Entwässerbarkeit des Schlamms nicht möglich.

Aus EP-A-0 240 974 (nicht vorveröffentlicht) und DE-A-3 344 275 ist es bekannt, die Dosierung vom Flockungshilfsmittel zu Abwasser in Abhängigkeit von einem vor der Flockmittelzugabe gemessenen, die Belastung des Abwassers anzeigenden Parameter wie z.B. pH-Wert und/oder Trübung, zu steuern. Die durch die Flockmittelzugabe erst entstehenden Schlammflocken werden dabei jedoch nicht meßtechnisch erfaßt und in die Steuerung einbezogen. In EP-A-0 146 015 wird ein Verfahren zur Beurteilung des Dispergiergrades in strömenden Dispersionen beschrieben, bei der der Druckabfall entlang einer definierten Strömungsstrecke der Dispersion gemessen wird, und zwar vorzugsweise stromabwärts von einer Dosierstelle des Flockungshilfsmittels. Eine unmittelbare optische Erfassung der Beschaffenheit der gebildeten Flocken findet dabei aber nicht statt.

Im übrigen wird bei sämtlichen vorgenannten Verfahren in Abhängigkeit von dem jeweils gemessenen Parameter der Suspension lediglich die Flockmittelmenge gesteuert. Dabei bleibt jedoch die Erkenntnis unberücksichtigt, daß es für die optimale Wirksamkeit des zugeführten Flockungsmittels nicht allein auf dessen Menge, sondern auch auf die Art seiner Einmischung ankommt.

Der Erfindung liegt die Aufgabe zugrunde, ein Verfahren der angegebenen Art und eine Vorrichtung zu seiner Durchführung anzugeben, bei der eine bessere Optimierung der Flockmittelzugabe, und zwar im Sinne der Erzielung einer möglichst guten Entwässerbarkeit des konditionierten Schlamms bei geringstmöglicher Dosiermenge des Flockmittels, möglich ist.

Die Lösung der Aufgabe ist in den Ansprüchen 1 und 5 angegeben. Die Unteransprüche geben weitere vorteilhafte Merkmale der Erfindung an.

Die Erfindung macht sich die Erkenntnis zu nutze, daß nicht nur Menge und Größe der als Ergebnis der Konditionierung gebildeten Schlammflocken, sondern vor allem deren Struktur ein unmittelbarer Indikator für die erzielte Entwässerbarkeit des Schlammes ist und direkt durch die Parameter der Konditionierung (Flockmittelmenge, Einmischenergie, Dosierart) beeinflußbar ist. Die mittels einer Schlammbildsonde erfaßte Flockenstruktur kann deshalb als Steuergröße zur Regelung der Konditionierungsparameter dienen, wobei durch Beeinflussung der Mischenergie die benötigte Flockmittelmenge minimiert werden kann.

Die Erfindung berücksichtigt insbesondere die Erkenntnis, daß nicht unbedingt die größte Schlammflocke eine optimale Entwässerbarkeit bedeutet. Zu große Flocken sind häufig nicht belastbar genug und werden unter dem Filtrationsdruck zerstört. Es wurde durch Versuche festgestellt, daß schlammspezifisch, d.h. für die verschiedenen Schlammtypen wie Belebtschlamm, Faulschlamm usw., jeweils eine bestimmte Flockengröße angegeben bzw. durch Versuchsreihen ermitteltwerden kann, die eine optimale Entwässerbarkeit garantiert. Bei der Durchführung des erfindungsgemäßen Verfahrens können diese zuvor für die typischen zu erwartenden Schlammarten bestimmen optimalen Flockengrößen, bzw. die diesen Größen entsprechenden Meßsignale der Schlammbildsonde, als Sollwerte gespeichert vorliegen; im Betrieb wird das momentane Meßsignal der Schlammbildsonde mit dem zum vorliegenden Schlammtyp gehörenden Sollwert verglichen und der oder die Parameter der Konditionierung entsprechend nachgesteuert. Dabei kann man so vorgehen, daß man Jeweils nur einen Parameter, z. B. die Flockmittelmenge, in einem begrenzten Bereich verändert und dann, wenn innerhalb dieses Bereiches eine ausreichende Verbesserung der Flockengröße nicht erzielt wird, auf die Veränderung eines anderen Parameters, z. B. der Einmischenergie, umschaltet. Alle diese Vorgänge können vorzugsweise durch einen entsprechend programmierten Prozeßrechner gesteuert werden.

Eine Ausführungsform der Erfindung wird anhand der Zeichnungen näher erläutert. Es zeigt:

    Fig. 1    ein Fließschema einer Anlage zur Durchführung des erfindungsgemäßen Verfahrens;

    Fig. 2    die Schemadarstellung einer bei dem Verfahren verwendbaren Flockenmeßvorrichtung;

    Fig. 3    die Schemadarstellung einer anderen Ausführungsform der Flockenmeßvorrichtung;

    Fig. 4    schematische Zeitdiagramme zur Veranschaulichung der Steuerung der Flockmittelmenge.

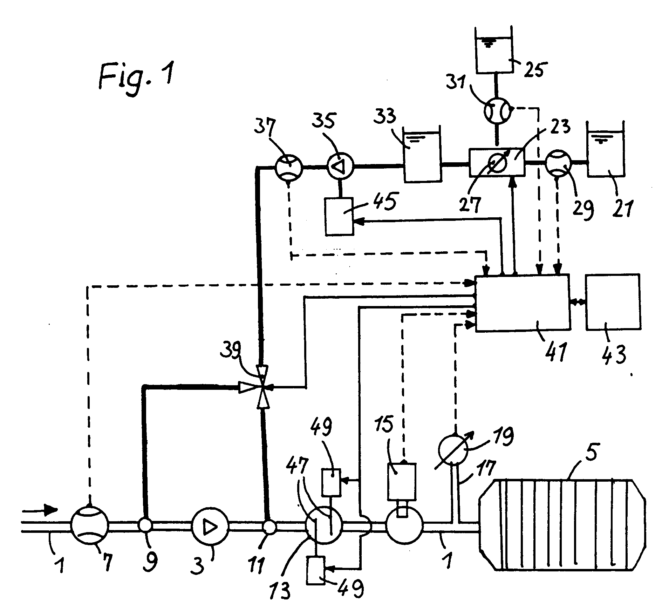

Gemäß Fig. 1 wird eine zu entwässernde Suspension über eine Leitung 1 mittels einer Pumpe 3 einer Entwässerungeinrichtung in Form einer Filterpresse 5 zugeführt, wobei die Pumpe 3 den Filtrationsdruck erzeugt. In der Leitung 1 sind ferner angeordnet ein Durchflußmesser 7, je eine vor und hinter der Pumpe angeordnete Zugabestelle 9,11 für Flockmittel, ein statischer Turbulenzmischer 13, eine Schlammeßsonde 15 und eine Abzweigung 17 zu einem Druckmesser 19, mit dem der am Einlauf der Filterpresse 5 herrschende statische Druck gemessen werden kann.

In einem Flockmittelbehälter 21 wird eine Flockmittellösung vorrätig gehalten, die durch Mischen von Wasser und dem jeweiligen Flockmittel, vorzugsweise einer organischen Polymerverbindung, in dem Behälter 21 oder in einer vorgeschalteten Flockmittel-Mischstation hergestellt wird, und zwar mit einer Flockmittelkonzentration, die größer ist als die für die Zugabe zur Suspension benötigte Konzentration. Es ist vorteilhaft, wenn die Flockmittellösung in dem Behälter 21 eine zur Reifung ausreichende Verweilzeit hat. Die Flockmittellösung wird in einer Verdünnungsstation 23 durch Zugabe von Wasser aus dem Behälter 25 zu einer gebrauchsfertigen Lösung mit einer Flockmittelkonzentration von z. B. 0,1 bis 0,2% verdünnt, wobei das Verdünnungsverhältnis durch ein steuerbares Mischventil 27 gesteuert werden kann. Die jeweils zuströmenden Mengen von Flockmittellösung und Wasser können durch Durchflußmesser 29, 31 laufend überwacht werden. Die gebrauchsfertige Lösung wird im Vorratsbehälter 33 vorrätig gehalten und über eine steuerbare Dosierpumpe 35 und einem weiteren Durchflußmesser 37 sowie ein umschaltbares Dreiwegeventil 39 einer der beiden Zugabestellen 9 oder 11 auf der Saug-bzw. Druckseite der Pumpe 3 zugeführt.

Mindestens von den Durchflußmessern 7 und 37, der Schlammessonde 15 und dem Druckmesser 19 sowie eventuell auch von den Durchflußmessern 29, 31 gehen Signalleitungen zu einem zentralen Signalverarbeitungs- und Steuergerät 41, welches an einen Prozeßrechner 43 angeschlossen ist, der auch mit Bildschirm, Drucker und ähnlichen üblichen Einrichtungen ausgestattet sein kann. Das Signalverarbeitungs und Steuergerät 41 erzeugt Steuersignale für das Mischventil 27, den Antriebsmotor 45 der Dosierpumpe 35, das Umschaltventil 39 und den Turbulenzmischer 13.

Der Turbulenzmischer 13 hat mindestens eine, vorzugsweise zwei um 180° versetzte Prallplatten 47 mit turbulenzerzeugenden Abreißkanten, die mittels entsprechender Stellmotore 49 mehr oder weniger weit in den Suspensionsstrom hineingeschoben werden können und dadurch eine mehr oder weniger große Turbulenz für das gründliche Einmischen des bei 9 oder 11 zugeführten Flockmittels in die Suspension erzeugen. Je nach der Stellung der Prallplatten 47 wird dabei eine mehr oder weniger große Einmischenergie verbraucht, die von der Pumpe 3 aufgebracht werden muß. Eine derartige Turbulenzeinmischung von Chemikalien in z. B. Abwässer mittels turbulenzerzeugender Schikanen ist z. B. aus der DE-OS 23 20 212 bekannt, jedoch ohne die Möglichekeit einer Regulierung der Einmischenergie durch Verstellen der Schikanen.

Die Schlammbildsonde 15 soll in erster Linie die Größe bzw. Form der nach der Flockmitteleinmischung vorhandenen Schlammflocken feststellen. Sie wird deshalb in einem solchen Abstand von dem Turbulenzmischer 13 angeordnet, daß die Suspension diesen Abstand in einer Zeitspanne zurücklegt, die eine optimale Reaktions-und Reifezeit zur Flockenbildung darstellt. Insbesondere kann die Schlammsonde 15 auch unmittelbar am Einlauf der Filterpresse 5 angeordnet sein.

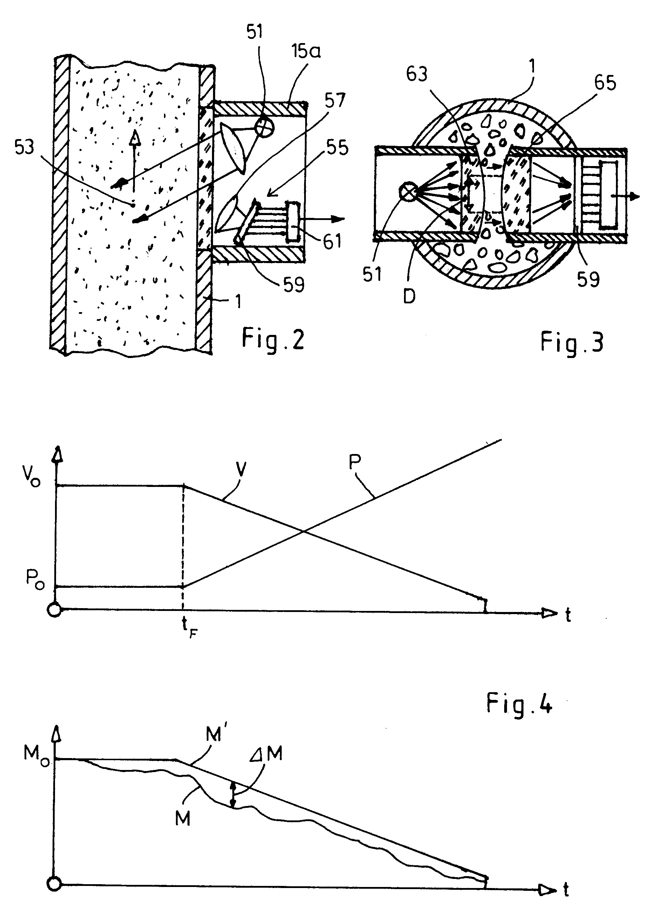

Ein Beispiel für eine erfindungsgemäß verwendbare Schlammbildsonde zeigt Fig. 2. Sie arbeitet nach dem Prinzip der optischen Streulichtmessung. In die Wandung der Suspensionsleitung 1 ist ein Meßkopf 15a eingesetzt.

Er enthält eine Lichtquelle 51 z.B. in Form einer Glühlampe oder auch einer Leuchtdiode, eines Lasers od.dgl. Die Lichtquelle erzeugt ein in den Suspensionsstrom gerichtetes, mittels einer Optik fokussiertes Lichtbündel 53. Ein optischer Detektor 55 ist so angeordnet, daß er von den Schlammflocken reflektiertes bzw. gestreutes Licht aus dem Lichtbündel 53 empfängt. Der Detektor 55 umfaßt eine Abbildungslinse oder -optik 57 und einen in deren Bildebene angeordneten Empfänger 59 in Form einer Matrix von lichtempfindlichen Bildpunkten (Pixels). Die Bildpunkte können in Form von separaten Sensoren ausgebildet sein, vorteilhaft ist die Verwendung eines als CCD (Charge Coupled Device) ausgebildeten Flächensensors, dessen Bildpunkte in integrierter Halbleitertechnik ausgebildete Sensoren darstellen. Die einzelnen Bildpunkte sind über eine Interfaceschaltung 61 an das Signalverarbeitungs- und Steuergerät 41 von Fig. 1 (oder auch an einen separaten, nur der Bildauswertung dienenden Rechner) angeschlossen. Bildauswertegeräte mit CCD-Flächensensoren sind kommerziell erhältlich. Da jeder Bildpunkt eine größere Anzahl (bis zu 256) von Grautönen erfassen kann, läßt sich aus der Verteilung der Grautöne über die Bildpunktmatrix eine Information über Menge, Größe und/oder Struktur der von der Lichtquelle 51 angeleuchteten Schlammflocken gewinnen.

Bei der in Fig. 3 dargestellten Ausführungsform der Flockenmeßvorrichtung sind in die Wandung der Suspensionsleitung 1 zwei von je einer sphärischen Linse 63, 65 abgeschlossene Meßrohre eingesetzt. Diese ragen so weit in den Rohrquerschnitt hinein, daß sich die sphärischen Außenflächen der Linsen 63, 65 unter Bildung eines engen Spaltes gegenüberstehen. Am Scheitelpunkt der Linsen ist die Spaltbreite kleiner als die kleinste Flockengröße, die mit der Meßvorrichtung erfaßt werden soll. Die Linse 63 kollimiert das Licht von der Lichtquelle 51 zu einem in die Suspension gerichteten Lichtbündel, die Linse 65 bildet die zwischen den Linsen befindlichen Schlammflocken im Durchlicht auf den Empfänger 59 ab, der z.B. ebenfalls als Matrix von Bildpunktsensoren ausgebildet sein kann.

Die Suspension in der Leitung 1 strömt senkrecht zur Zeichenebene. Dabei können die Flocken nur so weit zwischen die Linsen 63, 65 eintreten, wie es ihre Größe zuläßt. Ein mittlerer Bereich des von den Linsen 63, 65 erfaßten Gesichtsfeldes mit einem Durchmesser D bleibt somit frei von Flocken und erscheint auf dem Empfänger 59 als ein flockenfreies weißes Feld. Der Durchmesser D dieses freien Feldes ist unmittelbar ein Maß für die Flockengröße. Selbstverständlich kann der zur Bestimmung der Flockengröße verwendete Spalt auch auf andere Weise, z.B. als keilförmiger Spalt zwischen zwei ebenen Glasplatten, realisiert werden.

Es können zusätzliche Referenzdetektoren vorgesehen werden, um die Gesamtmenge des von den Flocken gestreuten Lichtes zu erfassen und die Lichtquelle 51 entsprechend nachzusteuern. Das vom Empfänger 59 erfaßte Signal ist dann von der Gesamtmenge der Flocken unabhängig.

Mit der in Fig. 1 schematisch dargestellten Anlage wird das erfindungsgemäße Verfahren vorzugsweise auf folgende Art durchgeführt: In dem Steuergerät 41 bzw. dem angeschlossenen Rechner 43 sind Daten gespeichert, welche für eine Vielzahl von zu verarbeitenden Suspensions- oder Schlammarten die für die Entwässerbarkeit optimale Flockengröße wiedergeben. Diese Daten sind vorab in gesonderten Meßreihen ermittelt worden. Bei Betrieb der Anlage werden jeweils diejenigen Daten abgerufen, die zu der gerade zu verarbeitenden Suspension gehören. Mit diesen Daten wird das von der Schlammbildsonde 15 kommende Meßsignal verglichen. Dies kann insbesondere periodisch, z.B. alle 0,8 sec erfolgen. Entspricht dieses Meßsignal nicht der optimalen Flockengröße, so wird vom Steuergerät durch Steuerung des Mischventils 27 und/oder der Dosierpumpe 35 die Menge des zugemischten Flockmittels erhöht. Dies hat eine Änderung der Form der von der Sonde 15 erfaßten Flockengröße zur Folge, die wiederum an das Steuergerät 51 zurückgemeldet wird, so daß sich ein rückgekoppppelter Regelkreis ergibt. Anstelle oder zusätzlich zu der Flockmittelmenge kann auch durch Verstellen der Schikanen 47 des Turbulenzmischers 13 die Einmischenergie verändert werden, was ebenfalls eine Änderung der Flockgröße zur Folge hat. Im Steuergerät 41 bzw. im Rechner 43 können Programme gespeichert sein, welche jeweils die Priorität der Steuerung der Flockmittelmenge oder der Einmischenergie festlegen. Insbesondere kann dieses Programm so ausgelegt werden, daß es selbsttätig erkennt, ob eine bestimmte Erhöhung der Flockmittelmenge zu einer hinreichenden Verbesserung der Flockengröße führt, und, wenn dies nicht der Fall ist, die weitere Erhöhung der Flockmittelmenge beendet und statt dessen die Einmischenergie am Turbulenzmischer 13 ändert. So kann durch gleichzeitiges oder programmiert wechselweises Verändern der Flockmittelmenge und der Einmischendergie das jeweilige Optimum ermittelt und ständig nachgeregelt werden.

Vom Einfluß auf die Flockengröße ist auch der Ort der Zudosierung des Flockmittels auf der Saugseite der Pumpe 3 bei 9 oder auf deren Druckseite bei 11. Die druckseitige Zugabe bei 11 hat den Vorteil, daß die Schlammflocken nicht in der Pumpe 3 zerschlagen werden, es hat sich aber in der Praxis gezeigt, daß eine Zumischung auf der Saugseite der Pumpe zu einer zwar nicht völlig optimalen, dafür aber geringeren Schwankungen unterworfenen Flockengröße führt. Durch Umschaltung zwischen den beiden Zumischorten 9 und 11 mittels des Umschaltventils 39 kann unter Steuerung durch das Steuergerät 41 ein zusätzlicher Optimierungseinfluß ausgeübt werden.

Ein weiteres Kriterium für die Schlammkonditionierung ist der am Einlauf der Filterpresse 5 herrschende Druck, der im Verlauf einer Filtrationscharge stark ansteigt, wobei sich gleichzeitig die Strömungsgeschwindigkeit der Suspension entsprechend erniedrigt, z. B. von anfänglich 40 m/sek. auf ca. 3 m/sek. am Ende der Filtrationscharge. Entsprechend dieser Änderung des Druckes in der Strömungsgeschwindigkeit ändern sich auch die optimalen Einstellwerte der Flockmittelzugabe, des Turbulenzmischers 13 und auch des Zugabeortes bei 9 oder 11. Das Steuergerät 41 kann deshalb auch anhand des vom Druckmesser 19 gemessenen Drucks und/oder des vom Durchflußmesser 7 gemessenen Suspensionsdurchsatzes z. B. die Einstellung der Schikanen 47 und/oder das Umschaltventil 39 steuern.

In Fig. 4 veranschaulichen die Kurven V und P einen typischen, schematisierten Verlauf der Suspensionsmenge V und des Beschickungsdrucks P beim Füllen einer Filterpresse. Bei Beginn der Beschickung werden zunächst die leeren Kammern der Filterpresse gefüllt, so daß bis zu einem Zeitpunkt $t_F$ die pro Zeiteinheit strömende Menge $V_O$ und der Beschickungsdruck $P_O$ im wesentlichen konstant bleiben. Nachdem die Presse zum Zeitpunkt $t_F$ gefüllt ist, muß das Filtrat nunmehr durch die Filtertücher hindurchgepreßt werden, wobei sich zunehmend Filterkuchen auf den Filtertüchern absetzt und den Strömungswiderstand erhöht. Hierdurch nimmt die Strömungsmenge V kontinuierlich ab und der aufzuwendende Beschickungsdruck P kontinuierlich zu, Diese Ab- bzw. Zunahme ist in Fig. 4 der Einfachheit halber linear dargestellt, kann aber selbstverständlich auch nicht linear von der Zeit abhängen.

In Abhängigkeit von der Suspensionsmenge V oder dem Druck P kann nun die pro Zeiteinheit zudosierte Menge M des Flockmittels grob gesteuert werden, so daß sich ausgehend von einer Anfangsmenge $M_O$ der Kurvenverlauf M' ergibt. Gleichzeitig bewirkt jedoch das Steuergerät 41 in Abhängigkeit von der an dem Meßgerät 15 erfaßten Flockengröße eine laufende Korrektur der Flockmittelmenge um eine Differenz $\Delta M$, die vorzugsweise als Minuswert aufgeschaltet wird. Es ergibt sich die endgültige Regelkurve M für die Flockmittelmenge, die sowohl an die während des Entwässerungsvorgangs abnehmende Strömungsmenge der Suspension angepaßt ist als auch im Sinne einer optimalen Flockenbildung geregelt wird.

In ähnlicher Weise kann auch durch Verstellen der Schikanen 47 die Mischenergie zunächst in Abhängigkeit von der Suspensionsmenge oder dem Beschickungsdruck der Filterpresse grob geregelt werden und, falls erforderlich, eine Korrekturregelung anhand der vom Meßgerät 15 erfaßten Flockengröße erfolgen.

## Patentansprüche

1. Verfahren zum Konditionieren und anschließenden Entwässern von Schlamm, bei dem einer zu entwässernden Suspension ein Flockmittel zugesetzt und unter Aufwendung von Mischenergie mit der Suspension vermischt wird, und bei dem in der strömenden Suspension nach dem Einmischen des Flockmittels eine optische Messung der in der Suspension vorhandenen Flocken kontinuierlich oder in zeitlichen Abständen durchgeführt wird und in Abhängigkeit von dem Meßergebnis ein Parameter der Flockmittelzugabe gesteuert wird, dadurch **gekennzeichnet,** daß bei der optischen Messung der Flocken die Flockenstruktur durch eine Schlammbildsonde mit einer Vielzahl von Bildpunktsensoren erfaßt wird, daß das für die Flockenstruktur repräsentative Meßergebnis mit mindestens einem vorgegebenen Sollwert, der eine für die Entwässerung optimalen Flockenstruktur entspricht, verglichen wird, und daß in Abhängigkeit von der bei dem Vergleich festgestellten Abweichung die bei der Flockeneinmischung aufgewendete Mischenergie gesteuert wird.

2. Verfahren nach Anspruch 1, dadurch **gekennzeichnet,** daß eine Vielzahl von Sollwerten, die optimalen Flockengrößen für verschiedene Schlammtypen entsprechen, gespeichert und der zum jeweils vorliegenden Schlammtyp gehörende Sollwert für den Vergleich ausgewählt wird.

3.    Verfahren nach Anspruch 1, dadurch **gekennzeichnet,** daß zusätzlich zu der Einmischenergie ein weiterer Parameter der Flockmittelzugabe, nämlich die Flockmittelmenge und/oder der Ort der Flockmittelzugabe, gesteuert wird.

4.    Verfahren nach einem der Ansprüche 1 bis 3, dadurch **gekennzeichnet,** daß zusätzlich die pro Zeiteinheit strömende Suspensionsmenge direkt oder indirekt, z.B. anhand des Druckanstiegs in der Entwässerungsvorrichtung erfaßt wird, daß die Steuerung der Mischenergie in erster Linie in Abhängigkeit von der Suspensionsmenge erfolgt, und daß dieser Steuerung die von der optischen Flockenmessung abhängige Steuerung als Korrektur überlagert wird.

5.    Vorrichtung zur Durchführung des Verfahrens nach einem der Ansprüche 1 bis 4, mit einer Entwässerungsvorrichtung (5), einer Zuführleitung (1) für Suspension, einer Flockmitteldosiervorrichtung (23,35), die mit mindestens einer in der Zuführleitung (1) mündenden Zugabestelle (9,11) verbunden ist, einer in der Zuführleitung (1) angeordneten Mischvorrichtung (13), einer in der Zuführleitung (1) stromab der Zuführstelle (9,11) angeordneten optischen Flockenmeßvorrichtung (15), einer das Meßsignal der Flockenmeßvorrichtung (15) empfangende Steuervorrichtung (41), dadurch **gekennzeichnet,** daß die Flockenmeßvorrichtung (15) mit einer Bildpunktmatrix versehen und an eine Einrichtung zur Auswertung der Flockenstruktur und zu deren Vergleich mit dessen einem gespeicherten Sollwert versehen ist und daß die Mischvorrichtung (13) mit Stellmitteln (49) zum Verändern der Mischenergie versehen ist, die an die Steuervorrichtung (41) angeschlossen sind.

6.    Optische Meßvorrichtung zum Erfassen der Struktur von Schlammflocken in einer in einer Leitung strömenden Suspension, zur Verwendung bei dem Verfahren nach einem der Ansprüche 1 bis 4, **gekennzeichnet** durch ein mit der Leitung über ein optisches Fenster gekoppelte Lichtquelle (51) und einen mit der Leitung (1) über ein optisches Fenster gekoppelten Empfänger (59), der von der Suspension durchgelassenes, reflektiertes oder gestreutes Licht der Lichtquelle empfängt, wobei der Empfänger (59) eine Matrix von Bildpunkten mit Einzelsensoren aufweist und an eine Bildauswerteeinrichtung angeschlossen ist, die anhand der Helligkeitsverteilung an den Bildpunkten die Flockenstruktur bestimmt.

7.    Optische Meßvorrichtung zum Erfassen der Struktur von Schlammflocken in einer in einer Leitung strömenden Suspension, zur Verwendung bei dem Verfahren nach einem der Ansprüche 1 bis 4, **gekennzeichnet** durch ein mit der Leitung über ein optisches Fenster gekoppelte Lichtquelle (51) und einen mit der Leitung (1) über ein optisches Fenster gekoppelten Empfänger (59), der von der Suspension durchgelassenes, reflektiertes oder gestreutes Licht der Lichtquelle empfängt, wobei der Leitungsquerschnitt im Bereich der optischen Fenster eine quer zur Strömungsrichtung kontinuierlich abnehmende Breite hat, deren kleinster Wert kleiner als die kleinste zu erfassende Flockengröße ist, und wobei der Empfänger (59) an eine Auswerteeinrichtung zum Bestimmen des flockenfreien Bereichs innerhalb des Spaltes angeschlossen ist.

**Claims**

1.    A process for the conditioning and subsequent dewatering of sludge, in which a flocculating agent is added to a suspension to be dewatered and is mixed with the suspension by applying mixing energy, and in which an optical measurement of the flocks present in the suspension is carried out continuously or at intervals of time in the flowing suspension after the flocculating agent has been mixed in, and a parameter of the addition of the flocculating agent is controlled as a function of the measurement result, characterised in that during the optical measurement of the flocks the flock structure is determined by a sludge image probe with a plurality of picture point sensors, in that the measurement result representative of the flock structure is compared to at least one predetermined desired value which corresponds to the optimum flock structure for dewatering, and in that the mixing energy applied during the mixing-in of the flocks is controlled as a function of the deviation determined in the course of the comparison.

2.    A process according to Claim 1, characterised in that a plurality of desired values are stored, which correspond to optimum flock sizes for different types of sludges, and the desired value associated with the particular sludge type present is selected for the comparison.

3.    A process according to Claim 1, characterised in that, in addition to the mixing energy, another parameter is controlled, namely the amount of flocculating agent and/or the location of the addition of the flocculating agent.

4. A process according to any one of Claims 1 to 3, characterised in that, additionally, the amount of the suspension flowing per unit time is determined directly or indirectly, for example by means of the pressure increase in the dewatering apparatus, in that the control of the mixing energy is primarily effected as a function of the amount of the suspension, and in that the control depending on the optical flock measurement is superimposed on this control as a correction.

5. An apparatus for carrying out the process according to any one of Claims 1 to 4, having a dewatering device (5), an inlet duct (1) for the suspension, a flocculating-agent metering device (23, 35) which is connected with at least one addition point (9, 11) opening into the inlet duct (1), a mixing device (13) disposed in the inlet duct (1), an optical flock-measuring device (15) disposed in the inlet duct (1) downstream of the addition point (9, 11), a control device (41) receiving the measurement signal of the flock-measuring device (15), characterised in that the flock-measuring device (15) is provided with a picture point matrix and is provided on a device for evaluating the flock structure and for comparing it with its one stored desired value, and in that the mixing device (13) is provided with actuator means (49) which serve to vary the mixing energy and which are connected to the control device (41).

6. An optical measuring apparatus for detecting sludge flocks in a suspension flowing in a duct, for use in the process according to any one of Claims 1 to 4, characterised by a light source (51), which is coupled with the duct via an optical window, and a receiver (59) which is coupled with the duct (1) via an optical window and which receives light from the light source reflected, scattered or transmitted by the suspension, wherein the receiver (59) has a matrix of picture points with individual sensors and is connected to a picture-evaluating device which determines the flock structure on the basis of the brightness distribution at the picture points.

7. An optical measuring apparatus for detecting sludge flocks in a suspension flowing in a duct, for use in the process according to any one of Claims 1 to 4, characterised by a light source (51), which is coupled with the duct via an optical window, and a receiver (59) which is coupled with the duct (1) via an optical window and which receives light from the light source reflected, scattered or transmitted by the suspension, wherein in the vicinity of the optical window the cross-section of the duct is of a width which decreases continuously transversely to the flow direction and the smallest value of which is smaller than the smallest flock size to be detected, and wherein the receiver (59) is connected to an evaluating device for determining the flock-free zone within the clearance.

**Revendications**

1. Procédé pour le conditionnement et ensuite la déshydratation de boues, dans lequel un agent de floculation est ajouté à une suspension à déshydrater et est mélangé à la suspension par l'application d'une énergie de mixage, et dans lequel, après l'introduction de l'agent de floculation, une mesure optique des flocs présents dans la suspension qui s'écoule est effectuée en continu ou à intervalles, un paramètre de l'addition de l'agent de floculation étant commandé en fonction du résultat de la mesure, caractérisé en ce que lors de la mesure optique des flocs, la structure des flocs est détectée par un analyseur d'image de boue comportant une pluralité de capteurs de points d'image, en ce que le résultat de la mesure représentatif de la structure des flocs est comparé à au moins une valeur de consigne prédéfinie qui correspond à une structure de flocs optimale pour la déshydratation, et en ce que l'énergie de mixage appliquée lors de l'introduction des flocs est commandée en fonction de l'écart établi lors de la comparaison.

2. Procédé selon la revendication 1, caractérise en ce qu'une pluralité de valeurs de consigne, qui correspondent à des tailles de flocs optimales pour différents types de boues, sont enregistrées et en ce que la valeur de consigne appropriée au type de boue présent est chaque fois sélectionnée pour la comparaison.

3. Procédé selon la revendication 1, caractérisé en ce que, outre l'énergie de mixage, un autre paramètre de l'addition de l'agent de floculation est commandé, à savoir la quantité d'agent de floculation et/ou l'endroit de l'addition de l'agent de floculation.

4. Procédé selon l'une quelconque des revendications 1 à 3, caractérisé en ce qu'en outre la quantité en suspension qui s'écoule par unité de temps est déterminée directement ou indirectement, par exemple au moyen de l'augmentation de pression dans le dispositif de déshydratation, en ce que la commande de l'énergie de mixage est effectuée en premier lieu en fonction de la quantité de suspension, et en ce que la commande dépendant de la mesure optique des flocs est superposée, en tant que correction, à cette commande.

5. Dispositif pour la mise en oeuvre du procédé selon l'une quelconque des revendications 1 à 4, comportant un dispositif de déshydratation (5), un conduit d'amenée (1) pour la suspension, un dispositif de dosage (23, 35) pour l'agent de floculation, qui est relié à au moins un point d'alimentation (9, 11) débouchant dans le conduit d'amenée (1), un dispositif mélangeur (13) situé dans le conduit d'amenée (1), un dispositif de mesure optique (15) pour les flocs, situé dans le conduit d'amenée en aval du point d'alimentation (9, 11), un dispositif de commande (41) recevant le signal de mesure du dispositif (15) de mesure, caractérisé en ce que le dispositif de mesure (15) des flocs est muni d'une matrice de points d'image et est relié à un appareil pour l'évaluation de la structure des flocs et pour sa comparaison avec une valeur de consigne enregistrée, et en ce que le dispositif mélangeur (13) est muni de moyens de réglage (49), qui sont raccordés au dispositif de commande (41), pour modifier l'énergie de mixage.

6. Dispositif de mesure optique pour déterminer la structure de flocs de boue dans une suspension qui s'écoule dans un conduit, à utiliser avec le procédé selon l'une quelconque des revendications 1 à 4, caractérisé par une source lumineuse (51) couplée au conduit par l'intermédiaire d'une fenêtre optique, et par un récepteur (59) couplé au conduit (1) par l'intermédiaire d'une fenêtre optique et qui reçoit la lumière de la source lumineuse, transmise, réfléchie ou dispersée par la suspension, le récepteur (59) présentant une matrice de points d'image avec capteurs individuels et étant raccordé à un appareil d'évaluation d'image, qui détermine la structure des flocs à partir de la répartition de la luminosité au niveau des points d'image.

7. Dispositif de mesure optique pour déterminer la structure de flocs de boue dans une suspension qui s'écoule dans un conduit, à utiliser avec le procédé selon l'une quelconque des revendications 1 à 4, caractérisé par une source lumineuse (51) couplée au conduit (1) par l'intermédiaire d'une fenêtre optique, et par un récepteur (59) couplé au conduit par l'intermédiaire d'une fenêtre optique, et qui reçoit la lumière de la source lumineuse, transmise, réfléchie ou dispersée par la suspension, la section transversale du conduit ayant dans la zone de la fenêtre optique une largeur qui diminue de façon continue transversalement au sens de l'écoulement et dont la plus petite valeur est inférieure à la plus petite des tailles de flocs à déterminer, et en ce que le récepteur (59) est raccordé à un appareil d'évaluation pour déterminer la zone sans flocs à l'intérieur de la fente.

Fig. 1

Fig.2

Fig.3

Fig.4